# EUROPEAN PATENT APPLICATION

(11) **EP 1 293 916 A2**
(43) Date of publication of application: **19.03.2003**
(21) Application number: 02292270.2
(22) Date of filing: 17.09.2002
(51) Int. Cl.: G06F 17/30

(54) **Search system using real name and method thereof**

(30) Priority: 17.09.2001 KR 2001057360
(71) Applicant: Netpia Dot Com, Inc., Seoul 150-038 (KR)
(72) Inventor: Lee, Pan-Jung, Youngdeungpo-gu, Seoul 150-038 (KR); Lee, Jong-Ho, Cheongju-city, Chungcheongbuk-do 360-082 (KR); Bae, Jeen-Hyun, Kwanak-gu, Seoul 151-812 (KR); Jung, Kwang-Jin, Kumi-city, Kyungsangbuk-do 730-040 (KR)
(74) Representative: Habasque, Etienne Joel Jean-François

(57) **Abstract**

Disclosed is a searching system for providing a search service to a client who accesses by using an access text including a domain name and a search word which comprises: at least one searching server; a real name database for storing an IP address, URL information, and a real name corresponding to a searching server on the Internet and being matched with each other; and a real name server for searching the real name database on the basis of the real name to find an IP address of the matched searching server and providing the same to the client when the domain name included in the access text input from the client is a real name; and the searching server searching information on the basis of the search word included in the access text provided by the client. Therefore, since Internet users may access the search page using a real name, they are not required to memorize the domain name of a predetermined search page, and since information search is executed almost at the same time of accessing the search page, the users may quickly receive desired information.

## Description

### BACKGROUND OF THE INVENTION

### (a) Field of the Invention

The present invention relates to a searching system and method using a real name. More specifically, the present invention relates to a searching system and method for easily accessing a search page and searching information using real names of English, Korean, and other alphabets when attempting to access a search page and search desired information on the Internet.

### (b) Description of the Related Art

In general, people have collected information through media such as books, televisions and newspapers, and as the Internet has quickly popularized, users all over the world have come to share various categories of information through the Internet, and accordingly, the tendency for searching information through the Internet has gradually increased.

However, since various and almost limitless categories of information are spread on the Internet, it is not easy for Internet users to find desired information. To solve this inconvenience, various search sites providers extract classified types of information from the scattered ones and provide them to the Internet users.

The search pages provide Internet-accessing users with input blanks for inputting search words, and information scattered on the Internet is searched on the basis of the search words input through the input blanks, and information desired by the users is sorted and provided to the users.

However, in order to search desired information, the Internet users are required to input a domain name corresponding to a search page to access the search page and enter a search word into a search word input blank provided by the search page, and accordingly, they cannot quickly search desired information because of many information-searching stages.

Also, so as to access the search page, the users need to input a domain name that is an Internet address of a computer for providing a search page on the Internet, but since the domain names include combinations of English letters according to a predetermined rule, it is relatively difficult for non-English speaking peoples such as Koreans, Japanese, and Chinese to memorize such domain names.

### SUMMARY OF THE INVENTION

It is an object of the present invention to provide a searching system and method for easily accessing search pages using real names that represent names generated by using a nation's own alphabet.

It is another object of the present invention to provide a searching system and method for providing a quick information-search process.

In one aspect of the present invention, a searching system for providing a search service to a client who accesses by using an access text including a domain name and a search word comprises: at least one searching server; a real name database for storing an IP address, URL information, and a real name corresponding to a searching server on the Internet and being matched with each other; and a real name server for searching the real name database on the basis of the real name to find an IP address of the matched searching server and providing the same to the client when the domain name included in the access text input from the client is a real name; and the searching server searching information on the basis of the search word included in the access text provided by the client.

In another aspect of the present invention, a searching system for providing a search service to a client who accesses by using an access text including a domain name and a search word comprises: at least one searching server; a real name database for storing URL information of the searching server and a real name, the URL information being matched with the real name; and an access agency server for searching the real name database to find corresponding URL information on the basis of the real name when the domain name included in the access text input by the client, connecting the client to the corresponding searching server according to the URL information, and providing the search word included in the access text to the searching server, the client comprises a hook module for checking generation of an access text input operation and when the access text input operation is generated, accessing the access agency server, and providing the input access text, and the searching server searches information on the basis of the search word included in the search words provided by the access agency server.

In still another aspect of the present invention, a searching system for providing a search service to a client who accesses by using an access text including a domain name and a search word comprises: at least one searching server; a real name database for storing an IP address, URL information, and a real name of the searching server, being matched with each other; an access agency server for connecting the accessing client to the corresponding searching server according to URL information stored in the real name database, and providing the search word included in the access text provided by the client to the searching server; and a real name server for providing an IP address of the access agency server so that the client may access the access agency server when the domain name of the access text input by the client is a real name, the access agency server extracts the access text from information of the accessing client, searches the real name database on the basis of the real name included in the access text to find corresponding URL information, and connects the client to the corresponding searching server according to the URL information, and the searching server searches information according to the search word provided by the access agency server.

The access text comprises a real name, an identification symbol, and a search word of the searching server, and the searching server and the access agency server determine the data positioned after the identification symbol in the access text to be a search word.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 shows a block diagram of a searching system using a real name according to a first preferred embodiment of the present invention;
FIG. 2 shows a flowchart of an operation of a searching system using a real name according to a first preferred embodiment of the present invention;
FIG. 3 shows a block diagram of a searching system using a real name according to a second preferred embodiment of the present invention;
FIG. 4 shows a flowchart of an operation of a searching system using a real name according to a second preferred embodiment of the present invention;
FIG. 5 shows a block diagram of a searching system using a real name according to a third preferred embodiment of the present invention; and
FIG. 6 shows a flowchart of an operation of a searching system using a real name according to a third preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

The searching system using a real name according to preferred embodiments of the present invention separately sets real names that comprise Korean characters, foreign characters except English letters, numbers, or symbols in correspondence to Internet addresses of all search pages registered on the Internet, thereby enabling search page access using a real name. The real name may comprise one word in English.

The URLs including the existing domain names and file names will henceforth be referred to as "English domain names," servers for providing an Internet address checking service on the existing domain names will be referred to as "English domain name servers," and strings input by a client for accessing a predetermined search page will be referred to as "access text." Therefore, the "access text" includes a domain name of a search page to be accessed, and the domain name in the access text comprises the "English domain name" and the "real name." In the embodiments of the present invention, the "real name" represents the actual name such as company names, shop names, and service titles. The Internet address represents an IP address and a URL of a predetermined search page on the Internet.

The searching system using real names according to the embodiments of the present invention may be applied to Internet electronic mail, the FTP (file transfer protocol), and the telnet, in addition to the WWW (world wide web).

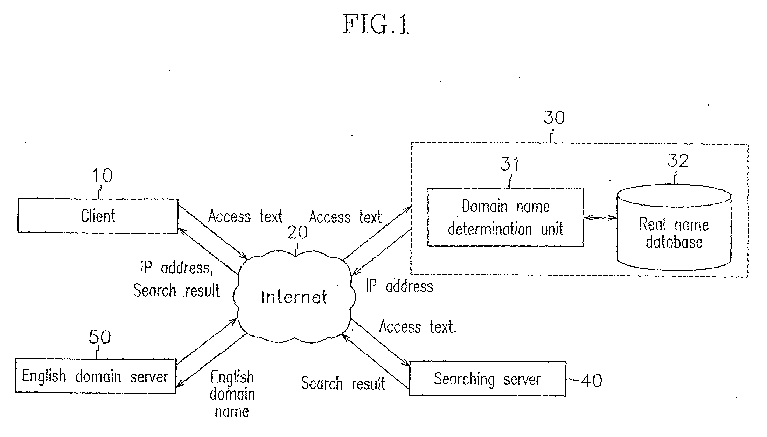

FIG. 1 shows a block diagram of a searching system using a real name according to a first preferred embodiment of the present invention.

As shown, the searching system using a real name comprises a client 10; a real name server 30 connected to the client 10 through the Internet 20; and a searching server 40, and it further comprises an English domain name server 50, that is, an existing domain name server, for processing English domain names. In this instance, there may be at least one searching server 40.

The client 10 comprises communication devices for accessing the searching server 40 through the Internet 20, for example, a computer, a mobile communication terminal, and an Internet TV. Hence, the client 10 may access the searching server 40 through the Internet 20 or a wireless communication network (not illustrated). The client 10 provides the searching server 40 with an access text including a real name, an identification symbol, and a search word of a desired search page.

In further detail, in order to reduce the number of search stages in the preferred embodiment, the real name matched with the Internet address of the searching server and a search word for representing desired information are input together at the initial access to the searching server, and in this instance, an identification symbol is additionally input before the search word so as to distinguish the real name from the search word and identify the search word.

For example, when attempting to access the search page 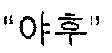 (Yahoo in English), the client 10 inputs an access text 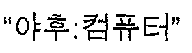 in the address input blank of the Internet-accessible web browser. Here, 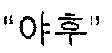 represents the real name, 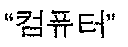 (computer in English) shows a search word, and the identification symbol is not restricted to ":".

The real name server 30 provides an IP address of the searching server 40 to the client on the basis of the access text provided by the client through the Internet 20, and the real name server 30 comprises a domain name determination unit 31 and a real name database 32.

The domain name determination unit 31 determines whether the domain name in the access text is an English domain name or a real name, and when the input access text includes no identification symbol or it includes an English domain name, the domain name determination unit 31 provides the input access text to the English domain name server 50 to be processed thereon. When the input access text includes an identification symbol or the domain name in the access text is a real name, the domain name determination unit 31 provides the client 10 with an IP address of the corresponding searching server 40 on the basis of the data stored in the real name database 32.

In this instance, when the access text includes no identification symbol, it is determined to be an English domain name, but it is not restricted to this.

Since general English domain name includes a dot "." as in the case of "yahoo.co.kr," the real name server 30 according to the first preferred embodiment of the present invention determines whether the input access text is an English domain name or a real name depending on whether the domain name in the input access text includes dots ".". Also, the real name server 30 determines the portion before the identification symbol ":" in the access text to be a domain name, and the portion after the identification symbol ":" to be a search word with reference to the identification symbol ":" in the access text.

The real name database 32 stores at least one real name corresponding to the IP address of the searching server that provides all searching services on the Internet 20, and URL information corresponding to each real name. For example, it stores a real name "Yahoo" corresponding to the IP address "210.103.175.66" and stores URL information "yahoo.co.kr" corresponding to "Yahoo." Further, the real name database 32 may store a real name and URL information matched with an IP address of another server except the searching server.

The searching server 40 searches data of a plurality of servers on the Internet 20 to collect information corresponding to the search word on the basis of the search word in the access text provided by the client 10 accessed through the Internet 20, and provides the information to the client 10.

An operation of the searching system using a real name according to the first preferred embodiment of the present invention will now be described.

Before driving a browser for accessing the Internet, the client 10 executes an Internet access environment setting program to set the real name server 30 to have a server function for providing an IP address checking service. It is desirable to previously store generally used IP address values of the English domain name as backup data, and restore them when the client 10 terminates the Internet access environment setting program, so that the default use by the client 10 may not be modified.

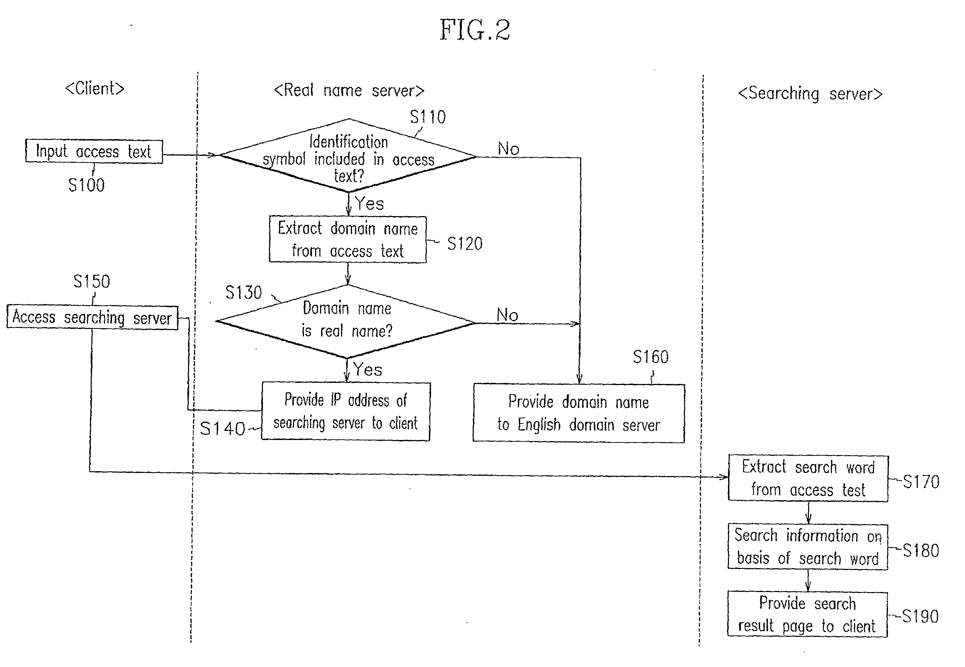

FIG. 2 shows a flowchart of an operation of a searching system using a real name according to a first preferred embodiment of the present invention.

As shown, when a user drives an Internet accessing web browser in the client 10, and inputs an access text (e.g., 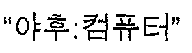 ) in the input window of the browser, the input access text is provided to the real name server 32 of the searching server 40 in step S100.

The domain name determination unit 31 of the real name server 30 determines whether the access text provided by the client 10 includes an identification symbol such as a colon ":", and when the access text includes a colon, the domain name determination unit 31 extracts a domain name included in the access text on the basis of the identification symbol in step S120. For example, the domain name determination unit 31 determines the data 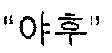 before the identification symbol ":" to be a domain name from the access text 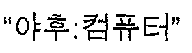 and extracts "Yahoo."

The domain name determination unit 31 determines whether the domain name extracted from the access text is an English domain name or a real name in step S130. For example, when the input domain name includes no identifier "." in the case of "netpia.net," the domain name determination unit 31 determines that the input domain name is a real name, searches the real name database 33 on the basis of the real name, finds a corresponding IP address, and provides it to the client 10 in step S140.

That is, as the IP address of the searching server matched with the input real name is provided to the client 10, the client 10 is accessed to the searching server 40 that has the corresponding IP address. In this instance, the client 10 provides the searching server 40 with the access text previously provided to the real name server 30 in step S150.

When the access text provided by the client 10 includes no identification symbol in the previous step S110, or the domain name in the access text includes no identifier "." in the previous step S130, the domain name determination unit 31 of the real name server 30 determines the domain name included in the access text to be an English domain name, and provides the English domain name to the English domain server 50.

Accordingly, the English domain name server 50 provides the IP address matched with the input access text to the client 10 so that the client 10 may access the web page that has the corresponding IP address in step S160.

In the above, when the client 10 accesses the searching server 40 according to the IP address of the searching server 40 provided by the real name server 30, the searching server 40 extracts a search word from the access text provided by the client 10 in step S170.

The searching server 40 determines the data positioned after the identification signal to be a search word with reference to the identification symbol included in the access text, and extracts it in the like manner of the real name server 30, and the searching server 40 collects information matched with the search word from a plurality of servers (not illustrated) on the Internet 20 on the basis of the extracted search word, and provides the same to the client 10 in steps S180 and S190. In this instance, the searching server 40 provides the client 10 with the information collected on the basis of the search word in the search result page format.

Namely, when the user inputs the access text 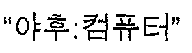 to access the real name server 30 as described above, the real name server 30 provides the client 10 with the IP address of the searching server 40 corresponding to 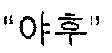 and when the client 10 accordingly accesses the searching server 40, the searching server 40 performs an information search on the basis of 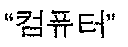 included in the access text 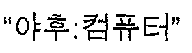 provided by the client 10, and provides information on the "computer," that is, a search result, to the client 10.

Therefore, the Internet users may use the real names that people refer to with their own language within their country to easily access the searching server without inputting an English search site, that is, an English domain name, and they may receive desired information without additionally inputting a search word after accessing the searching server.

An information searching system and method thereof using a real name according to a second preferred embodiment of the present invention will now be described.

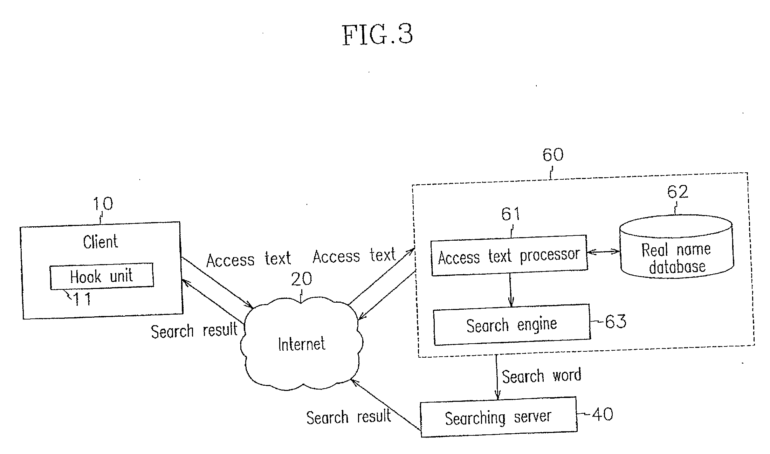

FIG. 3 shows a block diagram of a searching system using a real name according to a second preferred embodiment of the present invention.

When a client accesses the Internet in the searching system using a real name according to the second embodiment, the client is directly connected to an access agency server for providing an access agency service.

To achieve this purpose, as shown in FIG. 3, the client 10 of the searching system using a real name according to the second embodiment comprises a hook module 11 for connecting the client 10 to the access agency server 60 according to generation states of an Internet accessing operation.

The hook module 11, for example, determines whether the client 10 accesses the Internet according to whether the "Enter" key on a keyboard is operated in the web browser such as Explorer, converts the data, that is, the access text, input before inputting the "Enter" key in the web browser into a predetermined query statement, and provides the same to the access agency server 60.

The access agency server 60 is not a domain name server for providing IP addresses in the like manner of the real name server 30 according to the first preferred embodiment of the present invention, but a server of a site that provides an access agency service for connecting the client 10 to corresponding web pages according to real names.

The access agency server 60 comprises an access text processor 61 and a real name database 62. The access text processor 61 distinguishes whether the domain name included in the access text provided by the hook module of the client 10 is a real name or an English domain name in the like manner of the real name server according to the first preferred embodiment of the present invention, and when the domain name in the access text is a real name, the access text processor 61 searches the real name database 62 to connect the client 10 to the web page of the corresponding searching server 40. In this instance, the access text processor 61 provides the search word included in the access text provided by the hook module 11 of the client 10 to the corresponding web page's searching server 40 to thereby perform an information search operation.

The access agency server 60 may further comprise a search engine 63 for searching web pages that provide information matched with a real name, and providing a search result to the client 10 when the real name included in the access text is not stored in the real name database 62. The real name database 62 according to the second preferred embodiment of the present invention stores real names each matched with a URL of a server.

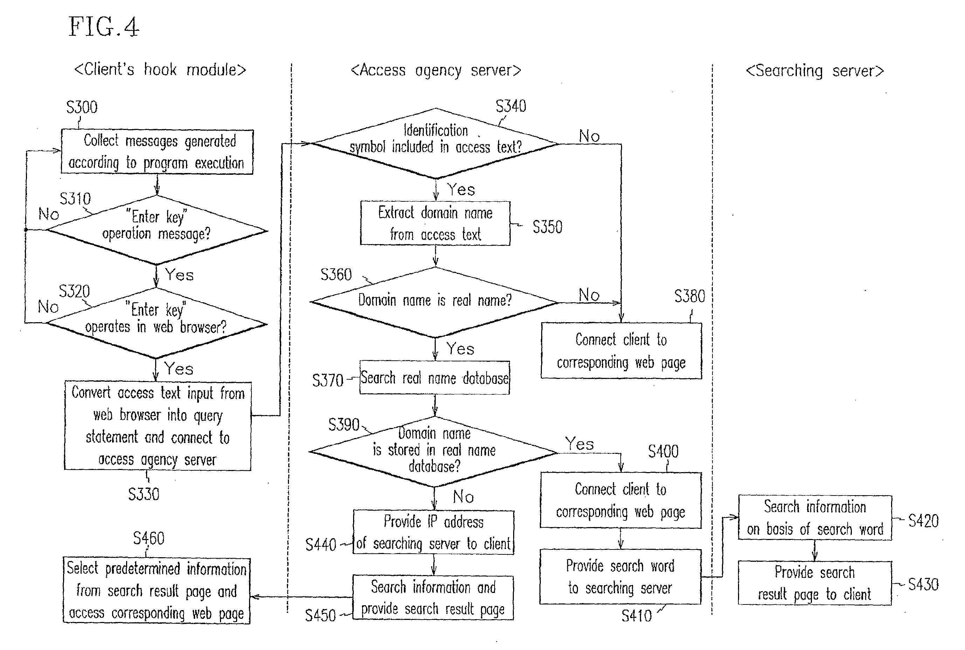

FIG. 4 shows a flowchart of an operation of a searching system using a real name according to the second preferred embodiment of the present invention.

As shown, the hook module 11 of the client 10 collects messages generated according to data inputting or program driving by the client 10 in step S300, and when the collected message is an "Enter key" operating message, and the "Enter key" is input from an Internet accessing program such as a web browser, the hook module 11 determines the strings input before generation of the "Enter key" to be an access text, converts the access text into a predetermined query statement, and connects the client 10 to the access agency server 60 in steps S310 through S330.

For example, when the string 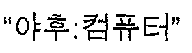 is input from the web browser, and the Enter key is operated, the hook module forms a predetermined query statement including the access text, that is, 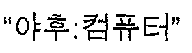 input together with the "URL" ?of the access agency server 60 as follows:
http://www.search.netpia.com/search.asp?keyword= 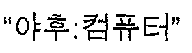

Accordingly, the client 10 is connected to the access agency server 60 together with the keyword 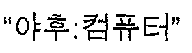 . Therefore, the client 10 is directly connected to the access agency server 60 without being connected to an additional server for providing an IP address checking service.

When the Enter key is not working, or it is not operated in the Internet accessing program, the hook module 11 continues to collect messages.

When the query statement is input from the client 10, the access text processor 61 of the access agency server 60 determines whether the access text that is a keyword included in the query statement includes an identification symbol ":" in step S340, and when the access text includes the identification symbol, the client 10 is determined to attempt to access the searching server, and the access text processor 61 extracts a domain name included in the access text on the basis of the identification symbol in the like manner of the first embodiment in step S350, determines whether the extracted domain name is an English domain name or a real name in step S360, and when it is a real name, the access text processor 61 searches the real name database 62 to find URL information of the corresponding searching server in step S370.

When the access text processor 61 of the access agency server 60 determines that the access text provided by the client 10 includes no identification symbol in the previous step S340, or the domain name included in the access text is an English domain name in the previous step S360, the access text processor 61 connects the client 10 to the corresponding web page according to URL information included in the predetermined query statement provided by the client 10 in step S380.

When the real name included in the access text is stored in the real name database 62, the access text processor 61 connects the client 10 to the web page of the corresponding searching server 40 according to URL information matched with the real name in steps S390 and S400. In this instance, the access text processor 61 connects the client 10 to the web page of the corresponding searching server 40 and concurrently provides the searching server 40 with the search word included in the access text provided by the client 10 in step S410.

Accordingly, the searching server 40 collects information matched with the search word from a plurality of servers (not illustrated) on the Internet 20 on the basis of the search word provided by the access agency server 60, and provides the information to the client 10 in steps S420 and S430.

When the real name included in the access text is not stored in the real name database 62 in the previous step S390, the access text processor 61 drives the search engine 63 to collect information of the web page that provides information including the corresponding real name on the Internet and connect the client 10 to the search result page in steps S440 and S450. Therefore, the client 10 may select predetermined information according to web page information provided by the search result page and access the desired web page in step S460.

In the above-described searching system using a real name according to the second preferred embodiment of the present invention, when the client generates an Internet access operation, that is, an access text input operation, the client is immediately connected to the access agency server, the access agency server enables an access to the searching server using a real name and provides a search word to the searching server to immediately perform information search, thereby, obtaining a faster access to the corresponding searching server and a searching operation.

A searching system using a real name according to a third preferred embodiment of the present invention will now be described.

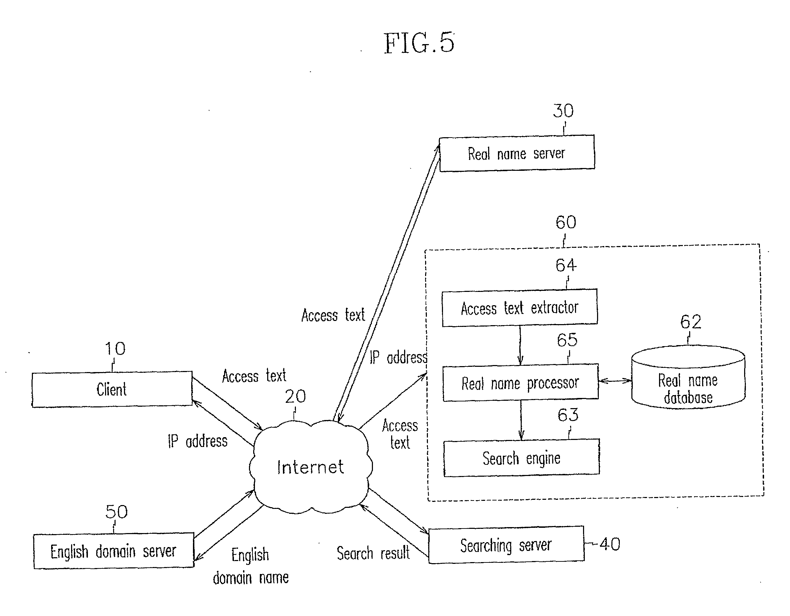

FIG. 5 shows a block diagram of a searching system using a real name according to a third preferred embodiment of the present invention.

As shown, the searching system using a real name comprises a client 10, a real name server 30, an access agency server 60, a searching server 40, and an English domain server 50. Differing from the first preferred embodiment of the present invention, not the real name server 30, but the access agency server 60 processes the case when the input access text is a real name.

The access agency server 60, differing from the second embodiment, comprises an access text extractor 64 for extracting the access text from the information of the accessing client 10, the access text being used for requesting an IP address checking from the real name server 30; and a real name processor 65 for searching the real name database 62 on the basis of the extracted access text to find a corresponding Internet address, that is, URL information. In addition, the searching system may further comprise a search engine 63.

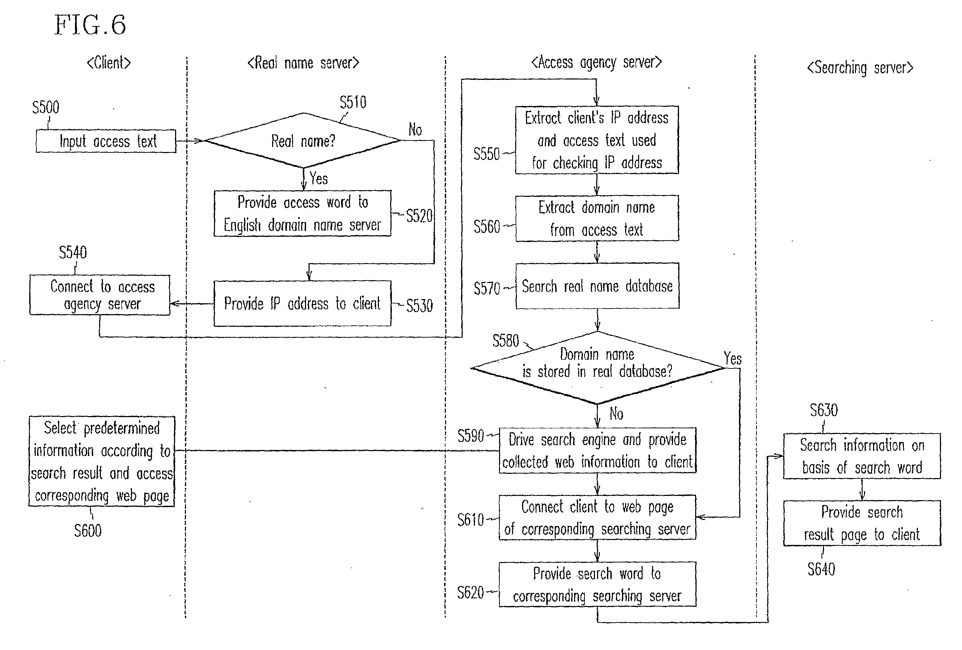

FIG. 6 shows a flowchart of an operation of a searching system using a real name according to a third preferred embodiment of the present invention.

As shown, when an access text is input from the client 10 in step S500, the real name server 30 determines whether the domain name included in the input access text is an English domain name or a real name in step S510. Here, the real name server 30 may determine whether the domain name included in the access text is an English domain name or a real name according to whether the most significant bit (MSB) of 8 bits that represent the domain name included in the access text is "0" or "1" or whether the domain name includes an identifier "." in the like manner of the first embodiment.

When the domain name included in the input access text is an English domain name, the real name server 30 provides the input access text to the English name server 50 to be processed in step S520, and when the domain name included in the access text is a real name, the real name server 30 provides the IP address of the access agency server 60 to the client 10 so that the client 10 may access the access agency server 60 in step S530.

The client 10 accesses the access agency server 60, according to the IP address provided by the real name server 30, together with information that includes the access text for requesting to check the IP address and the client's IP address in step S540.

The access text extractor 64 of the access agency server 60 extracts access text information for requesting to the check the IP address from the information of the accessing client 10 in step S550, and the real name processor 65 extracts a domain name from the access text in the like manner of the second embodiment, and searches the real name database 62 on the basis of the domain name in steps S560 and S570.

When the domain name included in the extracted access text is not stored in the real name database 62, the real name processor 65 drives the search engine 63 to collect information on the web pages that provide information including corresponding domain names from a plurality of servers connected to the Internet 20, and provides the same to the client 10 in the like manner of the second embodiment in steps S580 through S600.

When the domain name included in the extracted access text is stored in the real name database 62, the real name processor 65 connects the client 10 to the web page of the corresponding searching server 40 according to URL information matched with the real name, and provides the search word included in the access text to the searching server 40 in steps S610 and S620.

Accordingly, the searching server 40 collects information corresponding to the search word from a plurality of servers (not illustrated) on the Internet 20 on the basis of the search word provided by the access agency server 60, and provides the same to the client 10 in steps S630 and S640.

Further, the access agency server 60 may connect the client 10 to the corresponding web page according to whether the clients attempted to access a predetermined web page (e.g., a searching server web page) through the real name server 33.

In this case, the access agency server 60 may further comprise an access information database for storing access information, and in this instance, the access agency server 60 connects the client 10 to the web page of the corresponding searching server 40 according to whether access information of the client 10 is stored in the access information database, and the search word is provided to the corresponding searching server 40 to thereby perform information search.

In the above-described embodiment, the access agency server provides the search word included in the access text to the searching server, but without being restricted to this, the access agency server may provide the whole access text provided by the client to the searching server, and in this case, the searching server extracts the search word using the identification symbol included in the access text.

Also, the real name server encodes the real name included in the access text into an English data format so as to perform an IP address checking service using the Bind program used for the existing English domain name processing.

Further, the above-noted searching operation may be executed in the case of using a hierarchical real name.

According to the embodiments of the present invention, since the searching system may access search pages using real names in addition to URLs such as the existing English domain names, the users are not required to memorize each domain name of search pages.

Also, the Internet users may easily and quickly receive desired information by concurrently inputting a domain name of a search page and desired information to almost simultaneously access the search page and search information.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

## Claims

1. A searching system for providing a search service to a client who accesses by using an access text including a domain name and a search word, comprising:
at least one searching server;
a real name database for storing an IP address, URL information, and a real name corresponding to a searching server on the Internet and being matched with each other; and
a real name server for searching the real name database on the basis of the real name to find an IP address of the matched searching server and providing the same to the client when the domain name included in the access text input from the client is a real name; and the searching server searching information on the basis of the search word included in the access text provided by the client.

2. A searching system for providing a search service to a client who accesses by using an access text including a domain name and a search word, comprising:
at least one searching server;
a real name database for storing URL information of the searching server and a real name, the URL information being matched with the real name; and
an access agency server for searching the real name database to find corresponding URL information on the basis of the real name when the domain name included in the access text input by the client, connecting the client to the corresponding searching server according to the URL information, and providing the search word included in the access text to the searching server,
the client comprising a hook module for checking generation of an access text input operation and when the access text input operation is generated, accessing the access agency server, and providing the input access text, and
the searching server searching information on the basis of the search word included in the search words provided by the access agency server.

3. A searching system for providing a search service to a client who accesses by using an access text including a domain name and a search word, comprising:
at least one searching server;
a real name database for storing an IP address, URL information, and a real name of the searching server, being matched with each other;
an access agency server for connecting the accessing client to the corresponding searching server according to URL information stored in the real name database, and providing the search word included in the access text provided by the client to the searching server; and
a real name server for providing an IP address of the access agency server so that the client may access the access agency server when the domain name of the access text input by the client is a real name,
the access agency server extracting the access text from information of the accessing client, searching the real name database on the basis of the real name included in the access text to find corresponding URL information, and connecting the client to the corresponding searching server according to the URL information, and
the searching server searching information according to the search word provided by the access agency server.

4. The searching system of one of claims 1 though 3, wherein the access text comprises a real name, an identification symbol, and a search word of the searching server.

5. The searching system of claim 4, wherein the searching server and the access agency server determine the data positioned after the identification symbol in the access text to be a search word.
